# EUROPEAN PATENT APPLICATION

(11) **EP 2 688 170 A1**
(43) Date of publication of application: **22.01.2014**
(21) Application number: 12177267.7
(22) Date of filing: 20.07.2012
(51) Int. Cl.: H02G 3/32

(54) **Cable support device and electrical connector assembly**

(71) Applicant: Airbus Operations GmbH, 21129 Hamburg (DE)
(72) Inventor: Krohne, Ingo, 22559 Hamburg (DE)
(74) Representative: Isarpatent

(57) **Abstract**

The present invention provides a cable support device (10) for supporting a cable harness (1) at an electrical connector (2), comprising: a bracket member configured to be mounted adjacent to an electrical connector (2), wherein the bracket member defines a path for the cable harness (1) through a bend (13) adjacent to the electrical connector (2) to provide a drip loop (14) in the cable harness (1).

## Description

The invention relates generally to a cable support device for supporting a cable harness or wire harness at an electrical connector and to the installation of same, especially in an aircraft or spacecraft, as well as to an electrical connector assembly that includes such a support device.

Connector assemblies for cable harnesses are usually supplied with strain reliefs, which are available in straight and bent design solutions (e.g. a 90° or 45° angled bracket). These strain reliefs are usually open and relatively short. Closed versions of strain reliefs are also available, but they are generally only used to provide a connection point for metal braids intended as electric shielding.

A requirement in many manufacturing areas, including aircraft construction, is that the electrical connections provided at electrical equipment and/or system interfaces be designed to prevent penetration of liquids into those connections or their housings. A typical design measure for achieving this is the application of drip loops. Drip loops are realized by designs in which the cable harness is routed so that a cable bundle orientation is "downward" in front of the connector. This is typically achieved by a specific attachment point providing a downward orientation of the cable bundle. Strain reliefs are often applied in such cases to provide a general orientation in a direction of this attachment point.

In the event that an electrical connector is orientated in a direction from which fluids may be expected to drip, fall or spray, an area above the connector has to be protected by a so called splash guard or "rain" cover or umbrella to catch or collect the fluid and to guide it away from the connector.

Typically, substantial design effort is involved in aircraft construction to meet the liquid penetration requirements for the numerous electrical connections. On the one hand, this is a result of considerations regarding the free space required for the installations and, on the other hand, the mass or weight effects from the necessary attachment components (e.g. brackets, clamps etc.). In this regard, there are often cases in which the necessary design measures cannot be achieved, e.g. due to space constraints, or a lack of structure for the necessary attachment. In such cases an attempt is often made to seal the connectors and/or the cable harnesses in such a way, that no fluid ingress is possible.

Further, so-called "repair lengths" often need to be provided in the electrical installation. These are required if the wires or cables have to be re-connected with plug contacts. Design measures also need to be provided for these repair lengths if they are not stowed somewhere in the harness routing, e.g. via stirrups (ramps) or additional spacers.

It is therefore an object of the present invention to provide a new and improved cable support device for a cable or wire harness at an electrical connector, especially for use in an aircraft or spacecraft, and an electrical connector assembly incorporating same.

According to the invention, a cable support device as recited in claim 1 and a cable connector assembly as recited in claim 9 are provided. Preferred features of the invention are recited in the dependent claims.

According to one aspect, therefore, the invention provides a cable support device for supporting a cable harness at an electrical connector, comprising a bracket member configured to be mounted adjacent to an electrical connector, wherein the bracket member defines a path for the cable harness through a bend adjacent to the electrical connector to form or provide a drip loop in the cable harness.

The cable support device of the invention therefore provides a bracket structure that guides a cable harness or a cable bundle with a desired geometry (e.g. length, angular position etc.) to prevent liquid ingress at the electrical connector but also to provide strain relief. That is, the cable bundle is routed in the desired drip loop geometry.

In a preferred embodiment, the bend in the path of the cable harness defined by the bracket member is through an angle of at least about 15°, preferably an angle in the range of about 20° to 180° and more preferably in the range of 30° to 150°, from an orientation of the cable harness at the electrical connector. In this regard, the bend in the path of the cable harness preferably lies between a first portion of the bracket member proximate to the electrical connector and a second portion of the bracket member. The first portion of the bracket member defines an orientation of the cable harness at the electrical connector and the second portion defines an orientation of the cable harness after the bend. In this regard, the second portion may be configured to define an orientation of the cable harness extending away from the electrical connector at a downward angle of at least about 15°, preferably at least about 25°, below a horizontal axis. Accordingly, the second portion of the bracket member is designed to provide an orientation of the cable harness necessary for the drip loop desired, and thus prevent liquid from running along the cable harness to the electrical connector. Each of the first and second portions of the cable support device preferably comprises a substantially elongate member, which is preferably also substantially straight, i.e. extending in the orientation desired for the respective part of the cable harness.

In a preferred embodiment, the path for the cable harness defined by the bracket member includes a second bend between the second portion and a third portion of the bracket member. The third portion is configured to define an orientation of the cable harness in a direction away from the electrical connector extending upwards at an angle of at least about 15°, preferably at least about 25°, above the horizontal. As such, the third portion of the bracket member is configured to orient, support and/or guide the cable harness to complete the drip loop via the second bend. That is, the second bend preferably completes the form of the drip loop desired. Like the first and second portions, the third portion of the cable support device preferably comprises a substantially elongate member, which may also be substantially straight.

In a preferred embodiment, the bracket member may be formed as a unitary or integral structure. That is, the portions of the bracket member, i.e. first, second and/or third portions, may be formed integrally with one another. Alternatively, the various portions may be selectively connected with each other to form the bracket member. In this regard, the third portion of the bracket member may be selectively connectable to the second portion in a modular manner, so that the third portion may be added to the bracket member as desired, depending on the installation situation.

In a preferred embodiment, the portions of the bracket member (i.e. the first, second and/or third portions) are movable relative to one another to adjust and/or set a desired angle of the bend (i.e. the first and/or the second bend) in the path for the cable harness. For example, the portions of the bracket member may be deformable by hand or with tools (e.g. in a plastic deformation) to assume a desired configuration. Alternatively, the portions of the bracket member may be interconnected by hinge joints, which may be fixed or set in a desired position, depending on the particular application. In this way, the shape or geometry of the support device or bracket member may be adapted to a particular installation situation. In addition, parts of the bracket structure can be designed in different lengths, in order to provide repair length and/or to simplify the stowage of a repair length.

In a preferred embodiment, the cable support device further comprises at least one splash guard arranged to extend over the electrical connector. The splash guard is configured to catch or to deflect liquid splashing or dripping onto the electrical connector from above. The splash guard may, for example, comprise a plate member configured to extend above the electrical connector. The splash guard may be integrally formed with the bracket member. Alternatively, it may be selectively connectable to the bracket member in a modular fashion so that a splash guard may be added to the bracket member as desired, depending on the installation situation.

In a preferred embodiment, the cable support device further comprises a mounting adapter configured for attachment with the electrical connector. The mounting adapter is preferably provided on the bracket member (e.g. the first portion of the bracket member) and preferably includes attachment means such as a clip, screw or lug means for secure or fixed attachment with the electrical connector. Thus, the cable support device provides a bracket structure which can be screwed, clipped, latched or otherwise attached to an electrical connector housing (e.g. via a cap nut) and thereby configures the cable harness for strain relief and liquid ingress prevention.

Thus, the cable support device of the invention is able to integrate different functionalities (including strain relief, drip loop, splash guard or "rain" cover, and repair length) into a single highly integrated, optionally modular system, in which different functionalities can be combined depending on the installation situation.

Principally various designs are conceivable in dependence on the particular application. For example, in the event that the particular installation situation requires it, a splash guard or "umbrella" can be provided in order to protect the electrical connector from splashing fluids. In the event that protection via cover plate and drip loop is not sufficient, it is also possible to design the set-up as completely sealed by the addition of a housing or enclosure member. That is, in a preferred embodiment, the cable support device includes a housing to enclose the electrical connector. The housing member may be formed unitarily or integrally with the bracket member structure. As an alternative, it may be selectively connectable to the bracket member in modular fashion so that a housing may be added to the bracket member as desired, depending on the installation situation.

In principle, the invention may be developed as an individual component or a modular device (e.g. with splash guard or "rain" cover and drip loop structure separately connectable); for example, to realize later adaptations e.g. for repair lengths or angular positions of drip loops. The particular material of the support device may depend on the application. While plastic materials could offer weight advantages, the use of metal may be necessary to satisfy requirements for lightning-protection or EMI aspects.

According to another aspect, the present invention provides a cable connector assembly comprising: an electrical connector for connecting a cable harness or wire harness to electrical equipment; and a cable support device of the invention as described above with reference to any one of the embodiments. This cable connector assembly may optionally also include the cable harness or wire harness.

According to a further aspect, the invention also provides an aircraft or spacecraft having a cable support device and/or a cable connector assembly of the invention as described above with respect to any one of the embodiments.

For a more complete understanding of the invention and the advantages thereof, exemplary embodiments of the invention are explained in more detail in the following description with reference to the accompanying drawing figures, in which like reference characters designate like parts and in which:
- Fig. 1: shows schematic examples of both wrong and correct orientations of a cable harness at a connector;
- Fig. 2: shows another example of a cable harness connection arrangement;
- Fig. 3: shows further examples of cable harness connection arrangements at an electrical installation;
- Figs. 4: a)-d) show embodiments of a cable support device in an electrical connector assembly according to the invention; and
- Fig. 5: shows an aircraft incorporating one or more cable support devices according to the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a less abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as it accorded to such terms and expressions with respect to their corresponding respective areas of inquiry and study, except where specific meanings have otherwise been set forth herein.

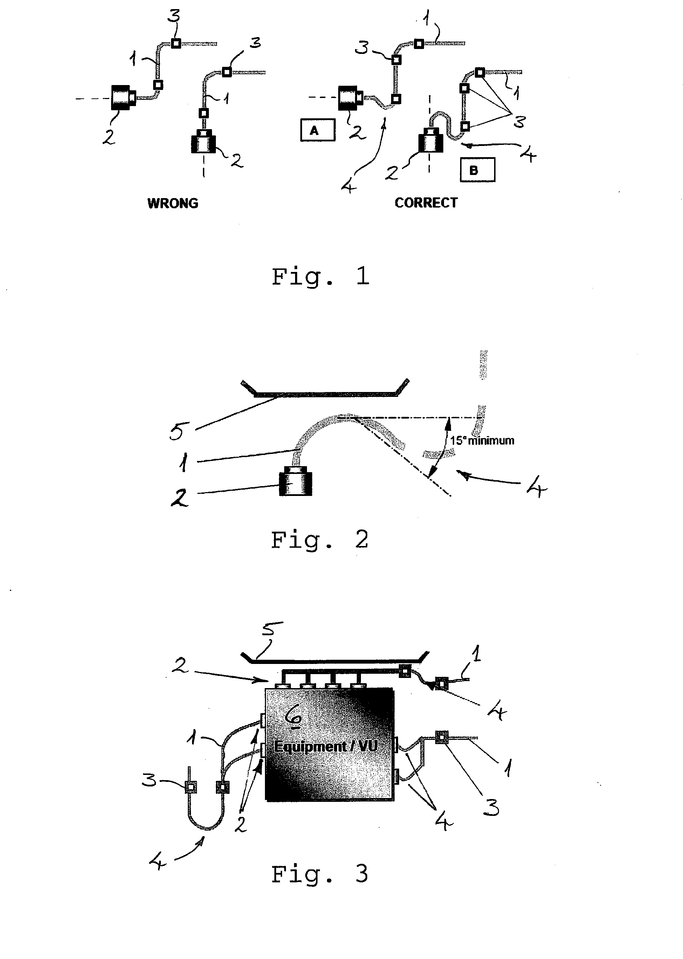

With reference firstly to Fig. 1 of the drawings, examples of the manner in which a cable bundle or harness 1 can be both wrongly and correctly directed and attached to an electrical connector 2, fixed along various mounting points 3, are shown schematically. The first two examples above the word "WRONG" illustrate arrangements where moisture accumulating on the cable bundle or harness 1 would be directed along the wires or cables such that it may simply flow into the electrical connector 2. The other two examples "A" and "B" above the word "CORRECT" show better configurations in which the cable bundle or harness 1 follows a dip or bend 4 (herein referred to as a "drip loop") before its attachment to the electrical connector 2. The drip loop 4 is designed to form a sink or trap for moisture or liquid that may accumulating on, or flow along, the cable harness 1 so that the moisture or liquid drips from this point of the drip loop 4 and is not able to flow further towards or into the electrical connector 2 due to gravity. Example "A" is an arrangement in which the cable harness 1 extends horizontally into the electrical connector 2, whereas example "B" is an arrangement in which the cable harness 1 extends vertically into the connector 2.

Referring now to Fig. 2 of the drawings, another example of a cable harness 1 with a vertical attachment to the electrical connector 2 is shown. In this case, a drip loop 4 is again formed in the cable harness 1 before the cables and wires of the harness 1 are attached to the connector 2. In addition, a separate plate member 5 is also shown arranged above the electrical connector 2. This plate member 5 is designed as a splash guard to catch or to deflect any moisture or liquid that may splash or drip down onto the electrical connector 2 from above, e.g. from a drip loop 4 of another cable bundle 1 mounted above. Thus, the plate member 5 is a cover plate that further protects the electrical connector 2 against unwanted ingress of moisture or liquid.

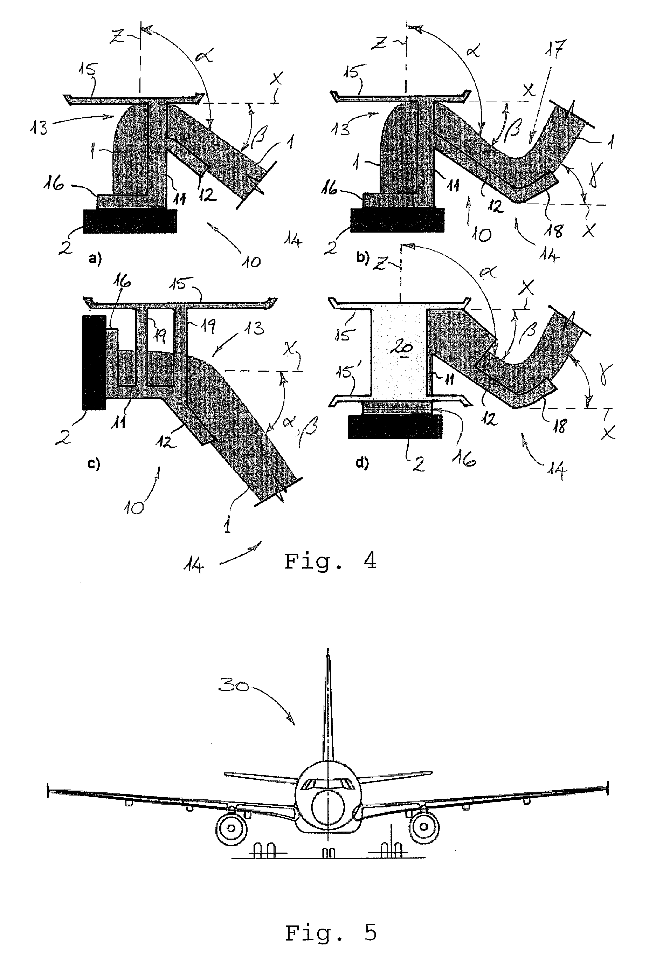

In Fig. 3 of the drawings, several electrical connectors 2 provided on an equipment installation 6 are shown. In this case, electrical connectors 2 at the sides of the equipment 6 have cable bundles or harnesses 1 that are fixed along paths (i.e. via mounting points 3) that incorporate drip loops 4 before the cable harnesses 1 enter the connectors 2. In this way, the cable harnesses 1 direct any collecting moisture or liquid under gravity away from the connectors 2 at the sides of the equipment 6. Similarly, a drip loop 4 is also provided at a top of the equipment 6 prior to the parallel attachment to the four electrical connectors 2. Because these electrical connectors 2 at the top of the equipment 6 would otherwise be exposed to moisture falling or splashing from above, however, a splash guard formed as a cover plate 6 is also provided. Turning now to Figs. 4a) to 4d) of the drawings, a number of embodiments of a cable support device 10 of the invention for supporting a cable harness 1 at an electrical connector 2 are illustrated in electrical connector assemblies. In Fig. 4a), for example, the cable support device 10 comprises a bracket member attached to the electrical connector 2 and includes a first portion 11 in the form of an elongate element, which extends upwards substantially parallel to a vertical axis Z, and a second portion 12 in the form of an elongate element, which extends at an angle to the first portion 11. The first and second portions 11, 12 together define a path for guiding the cable bundle or harness 1 through a bend 13. This bend 13 in the path of the cable harness 1 is through an angle α from a vertical orientation of the cable harness 1 along the first portion 11 of the support device 10 from the connector 2 to a direction or orientation dictated by the second portion 12. In this case, the angle α typically lies within the range of about 120° to 135°. Furthermore, the second portion 12 of the bracket defines an orientation of the cable harness 1 in a direction extending away from the electrical connector 2 at a downward angle β in the range of about 35° to 45° below a horizontal axis X. In this way, a length of cable harness 1 (i.e. at the break line) extending away from the connector 2 is properly oriented and configured for a drip loop 14 and for stress relief at the connector. The first portion 11 and the second portion 12 of the support device are desirably adjustable relative to one another so that the respective angles α, β defining the path of the cable harness 1 can be selected and set by a user. To this end, the first and second portions 11, 12 may be formed as deformable elements (e.g. of metal). As an alternative, they may be interconnected by an adjustable hinge joint.

As seen in Fig. 4a), the support device 10 further includes a cover plate 15 which is designed as a splash guard to catch and/or to deflect any moisture or liquid that may splash or fall onto the electrical connector 2 from above. As such, the cover plate 15 naturally substantially completely covers the connector 2 in the vertical direction. The cover plate 15 may be integrally formed with the first and second portions 11, 12 of the bracket member. Alternatively, the cover plate 15 may be designed to be selectively attachable to an upper end region of the first portion 11, so that it may be added or introduced only as needed, depending on the particular use. Regardless of whether it is integral or removable, the cover plate 15 in this embodiment may cooperate with the first and second portions 11, 12 of the bracket to assist in defining the cable path and the location of the bend 13. At the other end region of the first portion 11, the bracket member 10 includes a mounting adapter 16 for secure or fixed attachment to the electrical connector 2, e.g. by a screw thread, clip, or lug attachment means.

With reference to Fig. 4b), another embodiment of the cable support device 10 is shown. This embodiment is very similar to the embodiment of Fig. 4a), with the main difference being that the path for the cable harness 1 defined by the support device 10 includes a second bend 17 between second portion 12 and a third portion 18 of the bracket member. In particular, a third portion 18 of the bracket member extends from an end region of the second portion 12 and is configured to define an orientation of the cable harness 1 in a direction away from the connector 2 at an upward angle γ in the range of about 35° to 45° above a horizontal axis X. In this way, the second bend 17 completes the form of the drip loop 14 in the cable harness 1 thereby to prevent liquid from flowing along the cables or wires of the harness 1 into the electrical connector 2. The angle of the second bend 17 is therefore a combination of anglers β and γ. The third portion 18 of the bracket member may be integral with the second portion 12 or may be selectively connectable therewith in a modular way.

Fig. 4c) of the drawings shows an embodiment of the cable support device 10 for an electrical connector 2 arranged to receive a cable harness 1 in a horizontal direction. In this case, therefore, an angle α from a horizontal orientation of the cable harness 1 along a first portion 11 of the support device 10 from the electrical connector 2 to the direction or orientation dictated by a second portion 12 is the same as a downward anglee β defined by the second portion 12 after the bend 13 of the cable harness 1. In this case, the angles α, β are in the range of about 30° to 50° below a horizontal axis X. Again, therefore, a bend 13 provides a desired orientation and configuration for a drip loop 14 in the cable harness 1 to prevent liquid ingress to the connector along the cables. In this embodiment, a larger cover plate 15 is provided on strut elements 19 which extend from the first and/or second portions 11, 12 of the bracket member. The cover plate 15 is larger in order to cover the horizontal part of the cable harness 1 supported and guided by the first portion 11, since liquid splashing onto this part could potentially otherwise impinge upon the connector 2. The strut elements 19 may be integral with the bracket member or may be selectively added or connected to attach the cover plate 15 as desired.

The embodiment of the cable support device 10 in Fig. 4d) is very similar to the embodiment of Fig. 4b), and includes a second bend 17 between second and third portions 12, 18 of the bracket member. The main difference in this case is that the support device 10 in Fig. 4d) incorporates a housing or enclosure member 20 which completely surrounds and seals the electrical connector 2 for maximum protection against liquid or moisture ingress. In this embodiment, the cover plate 15 and a second cover plate 15' are incorporated in the housing or enclosure member 20.

Finally, an aircraft 30 is illustrated schematically in Fig.5 as this is a main field of application for the cable support devices 10 and electrical connection assemblies according to the invention.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: cable bundle or cable harness
- 2: electrical connector
- 3: mounting point
- 4: dip, bend, or drip loop
- 5: plate member or cover plate
- 6: equipment installation
- 10: cable support device
- 11: first portion
- 12: second portion
- 13: first bend
- 14: drip loop
- 15: cover plate
- 15': cover plate
- 16: mounting adapter
- 17: second bend
- 18: third portion
- 19: strut element
- 20: housing or enclosure member
- 30: aircraft
- Z: vertical axis
- X: horizontal axis
- α: angle of first bend
- β: angle below horizontal axis
- γ: angle above horizontal axis

## Claims

1. A cable support device (10) for supporting a cable harness (1) at an electrical connector (2), comprising:
a bracket member configured to be mounted adjacent an electrical connector (2),
wherein the bracket member defines a path for the cable harness (1) through a bend (13) adjacent to the electrical connector (2) to provide for a drip loop (14) in the cable harness (1).

2. A cable support device as defined in claim 1, wherein the bend (13) in the path of the cable harness (1) defined by the bracket member is through an angle of at least about 15°, and preferably through an angle in the range of 30° to 150°, with respect to an orientation of the cable harness (1) at the electrical connector (2).

3. A cable support device as defined in claim 1 or claim 2, wherein the bend (13) in the path of the cable harness (1) lies between a first portion (11) of the bracket member proximate to the electrical connector (2) and a second portion (12) of the bracket member, wherein the first portion (11) defines an orientation of the cable harness at the electrical connector (2) and the second portion (12) defines an orientation of the cable harness after the bend (13), wherein the second portion (12) is configured to define an orientation of the cable harness (1) extending away from the electrical connector (2) at a downward angle of at least about 15°, preferably at least 25°, below a horizontal axis (X).

4. A cable support device as defined in claim 3, wherein the path for the cable harness defined by the bracket member includes a second bend (17) between the second portion (12) and a third portion (18) of the bracket member, wherein the third portion (18) is configured to define an orientation of the cable harness (1) extending away from the electrical connector (2) at an upward angle of at least about 15°, preferably at least 25°, above a horizontal axis (X).

5. A cable support device as defined in any of claims 1-4, wherein the portions (11, 12, 18) of the bracket member are movable relative to one another to adjust and set a desired angle of the bend (13, 17) in the path for the cable harness (1).

6. A cable support device as defined in any of claims 1-5, further comprising at least one splash guard (15) arranged to extend over the electrical connector (2), wherein the splash guard (15) is configured to catch and/or to deflect liquid dripping or splashing onto the electrical connector (2) from above, wherein the splash guard (15) preferably comprises a plate member, which may be either integrally formed with the bracket member or modularly connectable thereto.

7. A cable support device as defined in any of claims 1-6, further comprising a mounting adapter (16) configured for attachment with the electrical connector (2), wherein the mounting adapter (16) is preferably provided on the bracket member and includes attachment means, such as a clip, screw thread or lug attachment means.

8. A cable support device as defined in any of claims 1-7, further including a housing (20) for enclosing the electrical connector (2).

9. A cable connector assembly comprising:
an electrical connector (2) for connecting a cable or wire harness (1) to electrical equipment (6); and
a cable support device (10) according to any one of the preceding claims.

10. A connector assembly as defined in claim 9, including a cable harness or wire harness (1) attached to the electrical connector (2) and supported by the cable support device (10).
